# EUROPEAN PATENT APPLICATION

(11) **EP 3 770 801 A1**
(43) Date of publication of application: **27.01.2021**
(21) Application number: 19275083.4
(22) Date of filing: 25.07.2019
(51) Int. Cl.: G06K 9/00

(54) **SYSTEM AND METHOD FOR PROCESSING IMAGES**

(71) Applicant: BAE SYSTEMS plc, London SW1Y 5AD (GB)
(72) Inventor: The designation of the inventor has not yet been filed
(74) Representative: BAE SYSTEMS plc Group IP Department

(57) **Abstract**

We describe a system and method for processing video streams, for example of vessels (12) in maritime environments. The system comprises a processor (34) for generating a first set of sample generation parameters which determine how a plurality of sample sub-sections are generated from a first frame of the video stream and applying the first set generated sample generation parameters to a first frame to generate a first plurality of sample sub-sections from the first frame. The first plurality of sample sub-sections are analysed to identify any clusters within each sample sub-section. Overlapping clusters are then combined to form at least one first plot; and the at least one first plot is classified to provide a classification which is indicative of which object is within the at least one first plot.

## Description

### BACKGROUND

The present invention relates generally to a method and system for processing images, particularly to automate the identification of maritime surface vessels which have been captured in a camera's video stream.

There are two approaches to object detection in a video stream: (i) static discrimination from the background; and (ii) movement detection. The latter is popular in a CCTV context, but is complicated in environments where the background and the camera may both be moving more than objects of interest, e.g. in a maritime environment where the waves are moving behind vessels of interest. Furthermore, in a maritime environment, cloud movement is often more pronounced and may be classified as movement rather than background. Classification based detection may also be used to detect objects of interest in an image. However, such detection methods are often only effective for objects which are relatively large (in pixel terms) within an image. Such large objects may be overlooked by static detectors (i.e. employing method (i)) because the object is not small compared to the background, and by dynamic detectors (i.e. employing method (ii)) because the object is not moving quickly.

It is an example aim of example embodiments of the present invention to at least partially overcome or avoid one or more problems of the prior art, whether identified herein or elsewhere, or to at least provide an alternative to existing systems and related methodologies.

### SUMMARY OF INVENTION

According to a first aspect of the present invention, there is provided a method for detecting objects within a video stream comprising a plurality of frames, the method comprising generating a first set of sample generation parameters which determine how a plurality of sample sub-sections are generated from a first frame of the video stream; applying the first set generated sample generation parameters to a first frame to generate a first plurality of sample sub-sections from the first frame; analysing the first plurality of sample sub-sections to identify any clusters within each sample sub-section; combining overlapping clusters to form at least one first plot; and classifying the at least one first plot to provide a classification which is indicative of which object is within the at least one first plot.

According to another aspect of the invention, there is also provided a system for detecting objects within a video stream comprising a plurality of frames, the system comprising
at least one camera capturing the video stream; and
a processor which receives the captured video stream and carries out the method described above.

According to another aspect of the invention, there is a non-transitory computer-readable medium comprising processor control code which when running on a system causes the system to carry out the method described above.

The following discussion applies equally to each aspect of the invention.

The sample sub-sections are generated using the sample generated parameters and may thus be any shape, size or orientation depending on the sample generated parameters. The sample sub-sections may overlap and may differ between subsequent frames.

A likelihood value for each identified cluster may be estimated, for example using a machine learning algorithm. The likelihood value may be the likelihood that the cluster relates to an object of interest. The machine learning algorithm may have been subject to supervised training based on video samples with labelled cluster data. Estimating the likelihood value for a cluster may use cluster metrics which are selected from one or more of cluster size of the cluster, the sample generation parameters used to generate the sample sub-section in which the cluster is located, a value indicating which parts of the cluster overlap with other clusters within the sample sub-section and the number of sample sub-sections within which the cluster is located but which generate no clusters which overlap the cluster.

The cluster metrics may be used when generating a subsequent set of sample generation parameters. This is one way in which the sample generation parameters may be adapted during the method. Initially the sample generation parameters may be uniformly distributed and adapt over time.

The identified clusters may be filtered based on the estimated likelihood value before combining overlapping clusters. In other words, the clusters with lower likelihood values may be discarded.

Analysing the plurality of sample sub-sections to identify any clusters may comprise applying a back detection algorithm to generate a grayscale image for each sample sub-section. Clusters may then be isolated (i.e. identified) within the grayscale image by applying a threshold to the grayscale image. The threshold may be applied so that pixels within the grayscale image having a value above the threshold are given a representative value of 1 and pixels within the grayscale image having a value equal to or below the threshold are given a representative value of 0. A pixel having a representative value of 1 surrounded by pixels having a representative value of 0 is indicative of the location of a cluster.

The plot may be categorised before classifying the at least one plot. The at least one plot may be categorised based on size.

Classifying the at least one plot may comprise using a machine learning algorithm. The classifications may be selected to be appropriate to the video stream. For example, for video streams tracking vessels, the classifications may include motor boats, sailing boats with sails up, sailing boats with sails down, small ferries, offshore patrol vessel or other maritime vessels. The machine learning algorithm may be trained using a transfer learning technique.

The method may comprise deciding whether the classification is of interest and when it is determined that the classification is not of interest, discarding the plot. When it is determined that the classification is of interest, the plot may be published. Classifying the at least one plot may comprise determining the relative probability that the classification is correct. The relative probability may be output with the at least one plot, for example published with the published plot where appropriate.

Classifying the plot may comprise dividing the plot into sub-plots and classifying each sub-plot separately to provide a sub-classification which is indicative of which object in within each sub-plot. The steps of dividing and classifying may be iterated, e.g. to divide the sub-plots into smaller sub-plots, until a sub-classification which corresponds to an object of interest is awarded to at least one of the sub-plots.

It will be appreciated that the method described above can be applied to each frame. Thus the generating, applying, analysing, combining and classifying steps may be repeated for subsequent frames of the video stream to generate subsequent plots and a classification which is indicative of which object is within the subsequent plots. By only analysing the sample sub-sections, results may be generated in real-time even for every frame of a high resolution stream. Before applying the generated sample generation parameters, a plurality of frames from the stream may be consolidated, e.g. to generate a consolidated image having a higher resolution than each individual image. This may also assist in producing effective results in an efficient manner so that the processing may be real-time.

The subsequent plots may be compared with each other and with the at least one plot to determine whether any plots have the same classification. A track between plots having the same classification may then be identified wherein the track is indicative of movement of the object within the plots. A thumbnail of the tracked object within each of the plots having the same classification may be generated. The thumbnails from each plot may then be compared with each other to generate a confidence result that the tracked object within each plot is the same.

It will be appreciated that any one or more features described in relation to an aspect of the invention may replace, or be used in combination with, any one or more features described in relation to another aspect of the invention, unless such replacement or combination would be understood by the skilled person as mutually exclusive, after a reading of this disclosure. In particular, any features described in relation to apparatus-like aspects may be used in combination with, or in place of, any features described in relation to method-like aspects. For example, each of the ways of determining or detecting a vehicle which are described above may be used alone or in conjunction with one another. They may also be carried out in any appropriate order.

### FIGURES

For a better understanding of the invention, and to show how embodiments of the same may be carried into effect, reference will now be made, by way of example, to the accompanying diagrammatic figures in which:
Figures 1a and 1b are a flowchart setting out the steps of one method of processing images;
Figure 1c is a schematic illustration of the output of one of the steps in the method of Figure 1a;
Figure 2 is a schematic illustration of a system which can be used to process images in accordance with Figures 1a and 1b;
Figure 3 is a flowchart setting out the steps of tracking a vehicle which has been identified from the processed images; and
Figure 4 is a flowchart showing the steps of generating a sample parameter set which is used in the method shown in Figures 1a and 1b.

### DETAILED DESCRIPTION

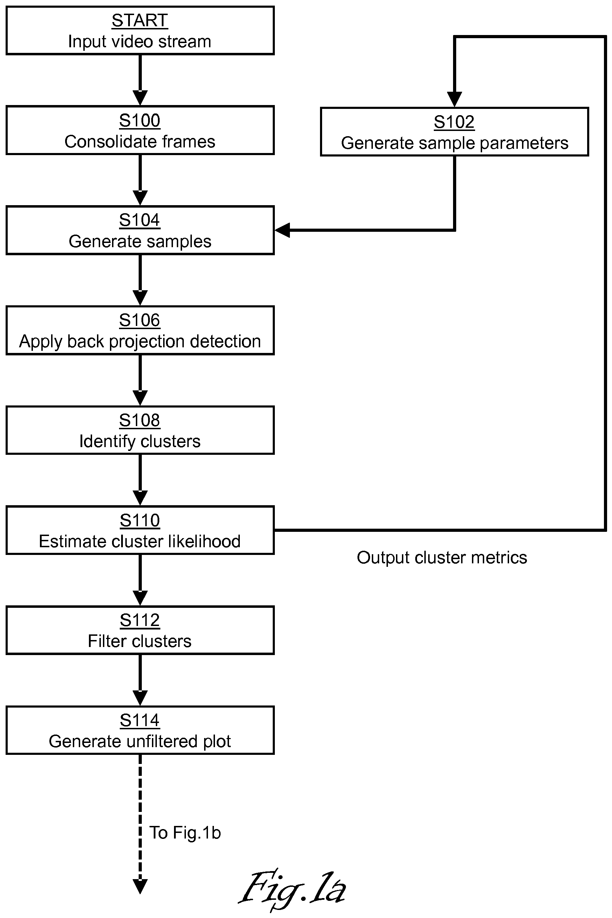

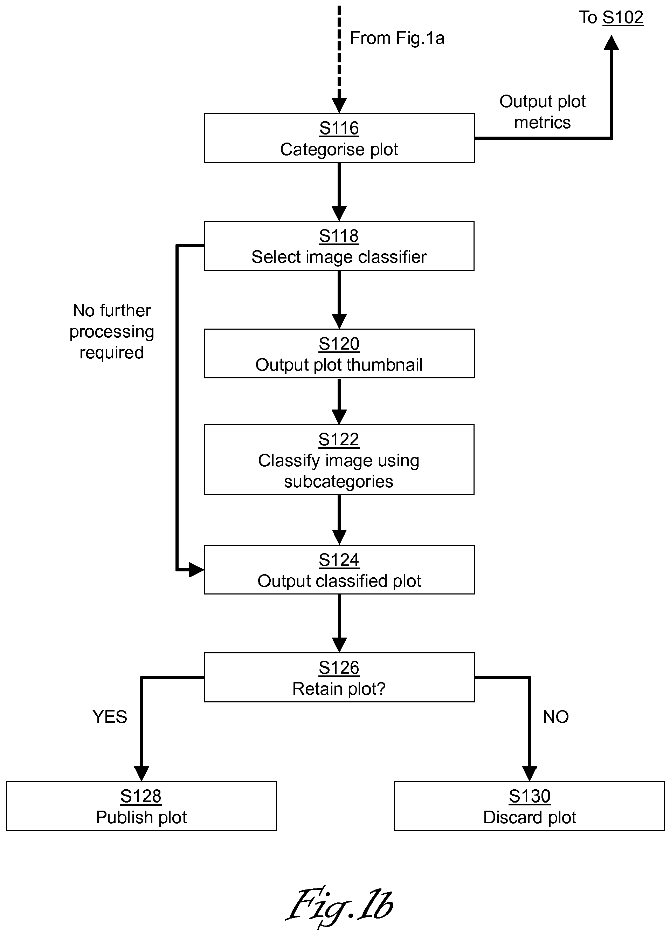

Figures 1a and 1b are a flowchart illustrating the steps in a method which aims to automate the extraction of information from video streams. In one example, and as described herein, the information may be tactically significant, and relate to vessels in a maritime environment. As explained in more detail below, the method leverages various techniques, including machine learning to provide image processing which is tailored to images having complex but broadly uniform backgrounds which dominate the images, and relatively small objects of interest that move relatively slowly within the images, e.g. images of maritime environments. The method is triggered when a video stream, e.g. from a video management module, is input or received.

As shown in Fig.1a, the initial steps of consolidating frames (S100) and generating sample parameters (S102) may be processed in parallel. The consolidating step may be highly computationally intensive and thus there may be a computational advantage in allowing parallel processing. Alternatively, these steps may be sequentially processed. The frame consolidation (S100) reduces the overall number of frames in order to generate higher resolution frames. For example, the input stream may comprise 24 or 25 frames per second and after consolidation there may be up to four frames (or even just three or two frames) per second, but of higher resolution. The consolidation step is a potential optimisation but is not essential to the generation of the sampling parameters and may thus be optional.

The step of consolidating frames (S100) may optionally further comprise removing other features which will interfere with subsequent processing, e.g. compression artefacts, lens features, atmospheric interference (e.g. rain), digital interference or other corruption effects. These features may be removed by considering samples across multiple frames. Super resolution techniques may be applied to up-sample, i.e. to create a higher-resolution image from typically multiple lower resolution images.

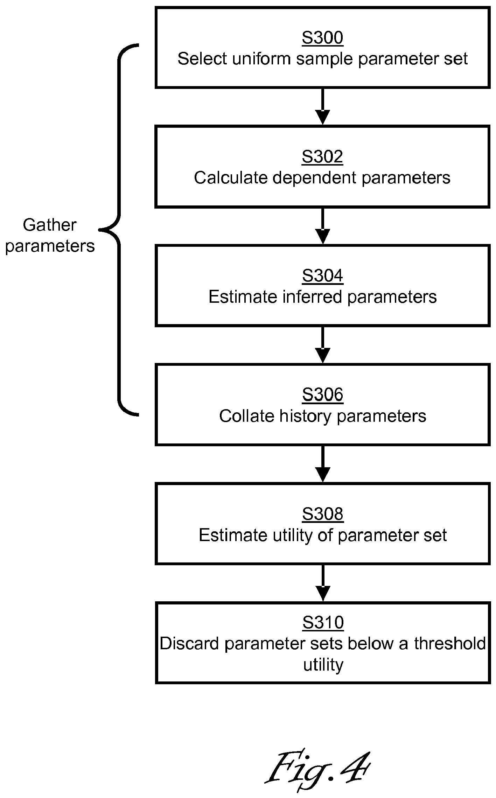

The step of generating sample parameters (S102) may be done using a generative deep learning model. The parameters which are generated may include stochastic cropping and skewing parameters from a learnt optimised distribution (including the number of samples per main image). These parameters are optimised to filter the samples so that they (predominantly) cover the sea and not the land or coastline features (e.g. sandbanks, mudflats, beaches, rocks, etc.). The parameters which are generated may also include statistically correlated threshold, bin-size and weight parameters for the back projection and histogram algorithms described in more detail below. Example sample parameters are provided in the tables (TABLES 1-5) referenced in the description of Figure 4.

The parameters may be dynamically adjusted based on tactical picture density metrics, current true plot versus clutter detection rates and current processor utilisation. As shown in Figure 1a, there is a feedback loop from the clustering steps (S108; S110) so that the generation of the parameters is adaptive to optimally bias the sample generation.

Once the frames have been consolidated and the sample parameters are generated, the next step S104 is to generate the samples. In this step, the consolidated frames are cropped and/or skewed using the sample parameters to detect objects in the main image. As an illustration, between 50 to 100 samples may be generated per consolidated frame. Initially, the samples may be uniformly and randomly generated but as the algorithm generating the sample parameters is optimised through the feedback loop, the generation of the samples is similarly optimised and thus improves over time.

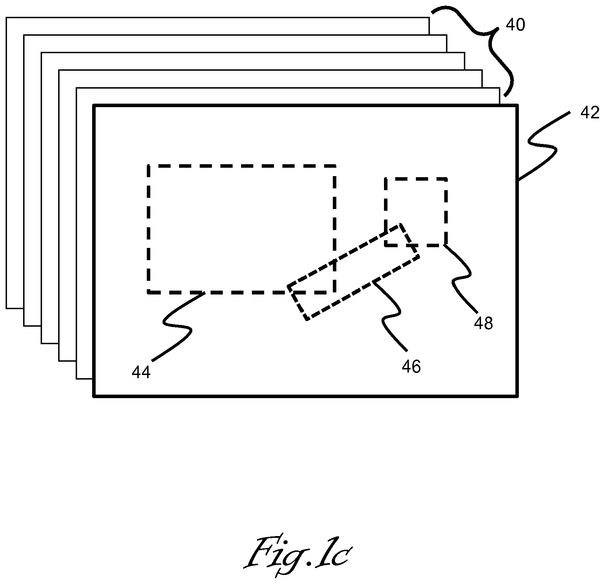

Figure 1c schematically illustrates a plurality of frames 40 which have been consolidated to a single frame 42. Three samples 44, 46, 48 have then been generated from the consolidated frame 42. As shown in Figure 1c, each of the samples (or subsections of the consolidated frame) is not just smaller "grid" divisions of the larger image. This is because such grid division may lead to detection effects caused by the standard/fixed boundaries of the sub-grids. Instead, the single frame is randomly divided into more manageable chunks. The random approach increases the chances of encountering an object within the larger frame. The samples can be of any shape, size or orientation as determined by the sample parameters. The samples may change between each frame. The sample areas may also overlap with each other, as shown in Figure 1c.

Returning to Figure 1a, for each sample, the next step is to apply a back projection detection algorithm which enhances the detection of objects within the image. The histogram and back projection algorithm is well known in the art. As explained below, in this arrangement, the algorithm has been adapted so that the histogram saturates on and detects the background before the inversion step to assist in detecting objections of interest. The algorithm may comprise counting the pixels having a similar value in each sample and placing them into a 3D set of histogram bins. The sample image is then back-projected using the histogram bin-values as a transformation mapping. In other words, each pixel in the sample image is mapped to the representative value of the bin it belongs to. For example, pixels with unusual values (e.g. different from the background) have low counts and the corresponding bin may be allocated to have a representative value which appears dark when the image is interpreted as grayscale.

Vector mapping information from Open Geospatial Consortium Web Feature Service (*WFS*) Interface Standard can be used to mask or screen out coastline features and any known objects. This masking step can be done when creating the background histogram. The coastline may also be screened by back-projecting as described above but the known objects are not screen in this way so that they can be redetected.

The grayscale image generated by the back-projection is then 'thresholded' to isolate potential 'plots' of objections. Thresholds and the distribution of bins may also be controlled and/or varied with reference to the randomly selected sample parameters The next step (S108) is to identify the clusters. Discrete clusters are identified by exponentially shrinking the image and searching for eyes (i.e. a group of pixels comprising a set pixel having a representative value of 1 surrounded by unset pixels having a representative value of 0). The cluster distribution is then found by mapping the set pixel back to the rectangle it represents in the original sample.

It will be appreciated that the generation of the sample images means that different parts of an object may be detected in different sample images with the pixel regions of overlap defining associations between the clusters. The clusters detected within different sample images from the same master high-resolution image for a particular camera at a particular time step thus need to be resolved.

The cluster metrics for each cluster are sent to a machine learning algorithm, or another appropriate algorithm (e.g. specific rules), to estimate a likelihood value for each cluster (step S110). This allows clusters to be compared (in terms of overlap) with other clusters generated from different samples of the same main image in order to estimate the likelihood that they relate to an object of interest rather than being an artefact of the back projection process or some form of clutter. The likelihood value is an estimate of the likelihood of a particular cluster corresponding to an object of interest based on various cluster metrics. The cluster metrics (i.e. the information about each cluster) may include one or more of:
- Cluster size (original pixels, pixels in main image and equivalent real-world area
- Sample generation parameters (i.e. the parameters which are used to generate the sample from which the cluster is derived)
- Cluster overlaps (a set of fractions of the cluster that are overlapped by other clusters)
- Missed samples (the number of samples for the main image that contain the cluster but didn't generate any clusters that overlap the one under consideration)

The machine learning algorithm (e.g. a deep neural network) may have been subject to supervised training based on video samples with known (or analysed) ground truth and with labelled cluster data indicating whether or not the object is relevant. The labelled cluster data may have been generated using additional analysis and may be labelled 0 for no object of interest or 1 for an object of interest. Optionally multiple runs of the same video can be used in the supervised training because each run will generate different sample generation parameters and hence different clusters. Therefore plenty of training data can be generated.

The deep neural network to be used may be a fixed size fully connected neural network rather than a recurrent neural network. If a fixed size NN is used, the cluster overlaps are statistically summarised by a mean, standard deviation and a count. There is some redundancy between some of the cluster size representations and the sample generation parameters. Moreover, some of the sample generation parameters are not expected to have a significant influence on the likelihood. The parameters which may be used for the model may include at least some (or all) of: back-projected cluster size (i.e. original pixels), cluster area (in the real-world), sample bin count, sample threshold, mean overlap, overlap standard deviation, overlap count and missed samples. Where 0 is used to label the trained data as not containing an object of interest and 1 is used to label the trained data as containing an object of interest, the model may output a likelihood value in the range 0 to 1.

At any point during the steps relating to the clusters, the cluster metrics may be used in a feedback loop to improve the generation of the sample parameters, particularly the dependent, inferred and history parameters.

The clusters may then be filtered stochastically (step S112) based on the estimated likelihood value. In other words, the clusters with higher likelihood value or all the clusters with a likelihood value above a threshold may be retained. Overlapping filter clusters are then combined to form an unfiltered, uncategorised plot (step S114). Such a plot may be considered to be a measurement of an object by a sensor system. In other words, in this method, the plot may be the algorithm's assertion that an object of interest has been detected at a location and time with some stated confidence. Each such plot may be assigned an overall confidence value based on their combined likelihood and overlap. The plot may be defined by bearing (azimuth and elevation) from the camera origin as well as extent (derived from cluster size).

The method continues in Figure 1b and as shown the next step is to categorise the plot (step S116), for example according to its size (e.g. in square metres). The categories are the first level and broadest sub-division in this example. Configurable thresholds are used. Such a categorisation may be regarded as a coarse assessment of the object based on the absolute (real-world) size within the image. For example, between 4 to 6 categories are anticipated for an example maritime application, but it will be appreciated that the number of categories may be dependent on the application, e.g. different applications may have different coarse sub-divisions. The categorised plots are then output. As shown, there is also a feedback loop to allow the plot metrics to be output to the sample parameter generating module. The plot metrics may be used to adapt the sample parameter generation step (Step S102) to improve the overall process.

The next step (step S118) is to select an image classifier which is to be used to classify the categorised plot. The classifications are the second level and narrower sub-division in this example. The image classifier is chosen based on the category of the plot and the image classifier classifies the image corresponding to the plot between classifications of object that can have a similar size. Classifications may be defined using the open architecture radar interface standard (OARIS) pre-recognition type with semantics defined by NATO's Standardization Agreement STANAG 5516. Merely as an example, the classifications may include motor boats, sailing boats with sails up, sailing boats with sails down, small ferries, offshore patrol vessel, or other maritime vessels. The classifications may thus be considered to be a finer or more detailed assessment of the object.

The image classifier may be a pre-trained deep learning model (e.g. a convolutional neural network CNN). In principle an arbitrarily deep hierarchy of classifiers may be used but 2 or 3 levels may be sufficient. The deep learning model may be a CNN architecture which has been pre-trained and then re-trained on maritime objects using a transfer learning technique. For example, the Inception v3 model from TensorFlow Hub may be used. The penultimate layer of the deep learning model may have been trained to output a set of values (termed bottleneck values or image feature vector) which allow the classifier to distinguish between all the classes are intended to be recognized. The set of values is ideally a meaningful and compact summary of the images because it needs to contain enough information for the classifier to make a good choice.

The set of values may be estimated for different objects. Similarly, the distribution of each value within the set of values may be estimated for the same object. Any suitable technique for the estimation may be used, e.g. k-means clustering applied to the training data for the type of classification (and sub-classification where used). Such techniques may be done offline. Furthermore, the prior, offline statistical information may be used to set up tests on a per classification basis for a value matching a particular object or just being part of the global distribution for that classification (e.g. divide the probability density function).

As shown, for some categorised and classified plots there is no need to do any further processing and the next step is to output the classified plot (step S124). However, some classified plots are processed further by an additional image classification model which has been trained on more detailed subcategories. The further processing may comprise outputting a plot thumbnail, i.e. a subsection of the plot (step S120), to the image classifier. The plot thumbnail is then classified using the more detailed subcategories (step S122).

Once the classified plot is output (step S124), there may be a consideration of whether or not to retain the plot (step S126). For example, the decision on whether or not to retain the plot may be a decision on whether or not the plot is of tactical interest. For example, in certain applications (e.g. military tactical applications) if the plot is classified as rock, water or surf, the plot is not of tactical interest and may be discarded (step S130). Similarly, if the plot is classified or is subsequently correlated spatially with a map feature (e.g. lighthouse or beacon), it may also be discarded. The plots which are discarded (i.e. filtered) may nevertheless be retained for calibration purposes. It will also be appreciated that in different applications, these plots may be the ones of interest and may be retained when other plots are discarded. If the plot is retained, it may then be published (step S128). For example, the plot may be published using any data distribution service with a publish-subscribe pattern, e.g. the one in the OARIS plot reporting service.

The output plot may include some or all of bearing, azimuth, extent and surface environment so that the user may determine where the objects detected within the camera's field of view are (e.g. where on the sea surface for surface maritime vessels). The most probable classification(s) of the plot may be published with the plot. The relative probability (i.e. the value between 0 and 1 as described above) of each classification being correct may also be published.

In addition to the (narrower) classification, the output plot may also comprise a (broader) category for all surface tracks for objects in the video. Ideally, the categories are applied only when they have an associated high-confidence value. For example, the performance requirement may be 25% as the mean error on area of cross-section. The upper and lower bounds for this requirement may be configurable dependent on the different platform identification types. If it is not possible to say with confidence that the plot belongs to a particular classification, it may be categorised as a "general surface track".

An example of the use of sub-categories/sub-classifications may be for a plot containing significant amounts of wake within the extent of the image that it describes. The wake will hinder both its correct classification and introduce positional inaccuracies. Image classification may recognise this situation. If a plot is classified as "vessel with wake", the plot may be divided into four quarters (with overlap). Each of these quarter plots may be separately classified with expected outcomes (i.e. subcategories) being "wake", "sea" and either "object of interest" or "vessel with wake". The outcome may thus still be "vessel with wake", in which case, the quarter plot with this categorisation is divided again and the resulting quarter plots (i.e. plots which are 1/16 of the original plot) are classified again using the subcategories. The process is reiterated until a sub-plot has the category "object of interest".

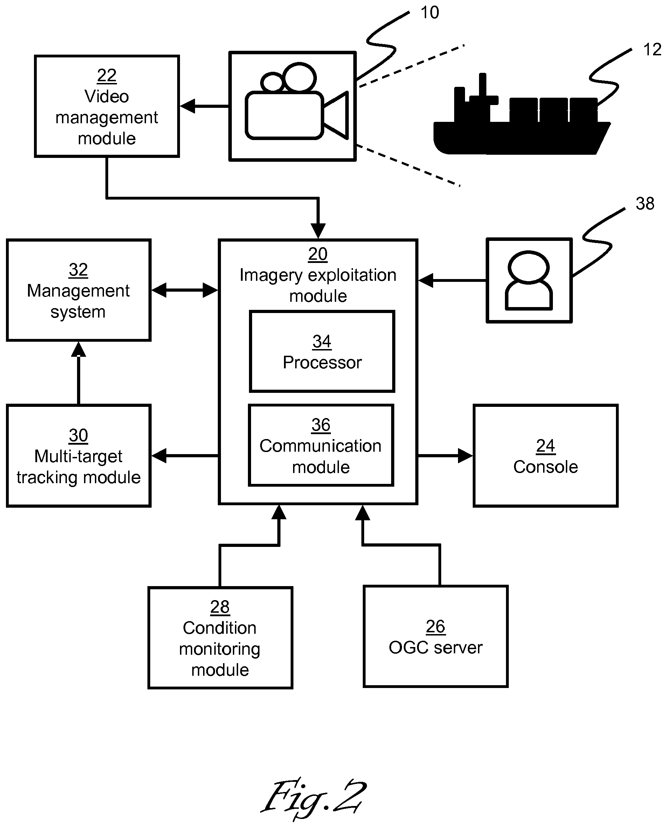

Figure 2 is a schematic block diagram of the system showing the components which may be used to implement the method shown in Figures 1a and 1b. The system may comprise a video management module 22 which receives video streams from one or more cameras 10 which are capturing images of maritime vessels 12. The video stream is sent from the video management module 22 to an imagery exploitation module 20 which performs the steps shown in Figures 1a and 1b. The imagery exploitation module 20 may also be termed a central module because it also communicates with each of a management system 32, a console 24, an OGC server 26, a condition monitoring module 28, a multi-target tracking module 30 and a picture compiler 38 which as shown may be a person or another computing module. It will be appreciated that the functionality of the various modules could be combined in to fewer modules or separated in to more modules. Similarly, the depicted flow of information and requests for information is merely indicative.

The imagery exploitation module comprises components such as a processor 34 for carrying out the steps in Figures 1a to 1b and a communication module 36 for facilitating the communication with the other modules. The received video stream from the video management module 22 may be transmitted from the imagery exploitation module 20 to the console 24, e.g. for viewing by a user of the system. Such a transmission can be used to show the original footage which has been categorised and/or classified as explained above.

As explained above, various inputs are used to improve the sample parameter generation at step S102 of Figure 1a. For example, the generation of the sample parameters may be dynamically adjusted based on tactical picture density metrics which may be received from the condition monitoring module 28. Optionally, the data from the imagery exploitation module 20 may also be shared with the condition monitoring module 28 as part of a big data service. Such an arrangement allows the internal parameters from the algorithm (as described above) for (offline) data analysis to improve performance.

As explained above, vector mapping information from Open Geospatial Consortium (OGC) Web Feature Service (*WFS*) Interface Standard can be used to mask or screen out coastline features and any known objects. As shown in Figure 2, the information necessary to perform this step may be received from an OGC server 26.

At the end of Figure 1b, each classified and categorised plot may be published for each frame in the video stream. These plots may be received by the multi-target tracking module 30 which may then compare plots to determine when an object has received the same classification in plots associated with subsequent frames. The multi-target tracking module 30 may then identify the track, i.e. the movement of the object between the subsequent plots. Results from neighbouring frames can assist in object detection, for example if something was detected at a particular location, e.g. 234.523 within the previous frame, the multi-target tracking module 30 may look for the same object at a nearby location in the next processed frame. More than one target can be tracked in this way. The multi-target tracking module 30 may also receive plots from other sensors and may combine all its inputs to improve the quality of the composite track.

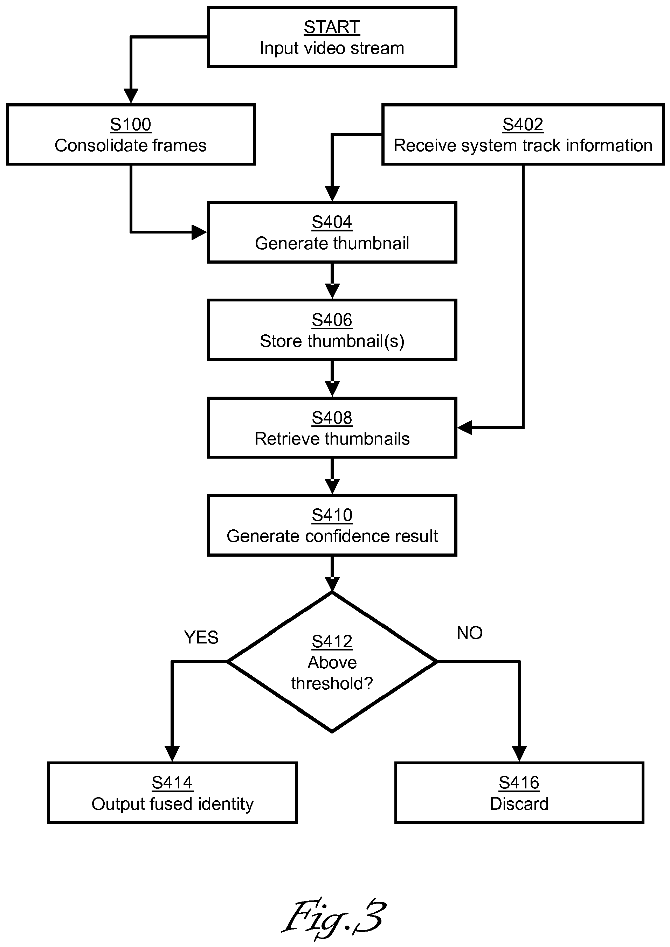

The multi-target tracking module 30 outputs each identified track to the management system 32 which may feed the each identified track to the imagery exploitation module 20, for example for the processing described in Figure 3 to be carried out. As explained below, the output from the process in Figure 3 is fused data which can be fed back to the management system 32. The imagery exploitation module may also generate alerts, e.g. when classifying a plot as an object of interest, such alerts may be communicated to the management system 32 using an ALMAS flow (Alert Management System).

The imagery exploitation module may also comprise an internal performance monitoring module which can be used to log or record every time a classification of a track or an object is made (and also when an alert is issued). A threshold for the correct identification of objects and/or tracks can be set at any suitable value between 0 to 100% and a typical confidence threshold may be 90% or 95%. The internal performance monitoring module could also be used to check whether the input or output data is corrupt and warn a user accordingly. The internal performance monitoring module could also be used to check that if the system is shown the same or similar data, the output from the system is the same or similar, i.e. the system assigns the same identity to the same vessel if the video data is repeated. The internal performance monitoring module could also be used to check how quickly the system is identifying tracks and/or classifying objects. For example, the acceptable threshold for identifying a new track or classifying an object may be set at a few seconds from initial detection. If this time frame is not met, an alert may be issued.

Figure 3 shows the steps which may be involved in assessing system tracks for the same vehicle/vessel appearing through a portion of the video stream. The initial steps are the same as in Figure 1a, in that the video data is received, e.g. from the video management module of Figure 2 and the frames are consolidated as described above in Step S100. Such a consolidation step may be a relatively highly computationally intensive step. As explained above, a track may have been identified for a vessel which appears in more than one frame in the video data. The system track information may be received from the management system of Figure 2. Steps S100 and S402 may be carried out simultaneously as shown or in a different order.

For each consolidated frame for which there is associated track information, the next step S404 is optionally to generate a thumbnail still. This thumbnail corresponds to the tracked object within the frame which corresponds to the received system track information. The generation of the thumbnail from the input high resolution frame is generally less computationally expensive than the consolidation step. The generated thumbnail is then stored (step S406) in an imagery database. The imagery database may store multiple such thumbnails for further analysis together with other images of vessels.

The imagery exploitation module may then use the stored thumbnails to recognise specific vessels. The system track information may be sent from the management system of Figure 2 and this may trigger the retrieval of images (e.g. thumbnails) from the datastore (step S408). A pair of images may then be compared to generate a confidence result that the images in each pair relate to the same vessel (step S410). The confidence result may be generated using the bottleneck values described above.

Optionally, if the confidence result has a high value, i.e. is above a threshold (step S412), the result may then recommended to the management system using a data fusion interface which outputs a fused identity (also termed a recommended identity - step S414). Otherwise, the results are discarded (step S416). The confidence results may be updated if there is a significant change (i.e. the best assessment changes subject to configurable hysteresis) or the confidence increases by a significant amount (configurable).

The operator may also be able to override the automatic assessment. If the operator has previously intervened on a track then the operator is alerted on a significant change for that track rather than have an automatic assessment made. It will also be appreciated that the images being compared may be two thumbnails which have been generated at step S404 (one of which was generated at a previous time) or may be a current thumbnail together with a library image of a vessel of interest.

Figure 4 shows the steps which may be involved in generating the sample parameters (step S102 of Figure 1a). The sample parameters may include different sets of parameters, including for example a set of uniform parameters, a set of dependent parameters, a set of inferred parameters and a set of history parameters. Each of these sets is generated in a separate sequential step in Figure 4 but it will be appreciated that this is just one possible arrangement of the steps. The steps could be carried out in a different order or may be carried out simultaneously and together the steps form an overall concept of gathering the sample parameters. As explained above, the sample parameters may be generated using deep learning algorithms and may also include feedback loops. The aim when generating the set of sample parameters is to generate a set which will optimise high-level picture compilation outcomes. Each set of sample parameters comprises the current dependent parameters, an estimate of the current inferred parameters and history parameters which indicate the history of recent usage of these parameters. The high-level picture compilation outcomes are encapsulated by a utility measure that reflects picture compilation metrics as described below in more detail.

As depicted in Figure 4, the first step (S300) is to select the set of uniform sample parameters. These parameters may be used for the static detection algorithm, i.e. whilst applying the back-projection detection, and parameterise the detection algorithm's processing of the sample. The parameter space is preferably wholly discrete as some of the parameters are discrete and it is anticipated that the associated deep neural nets will perform better with discrete parameters. The set of parameters (i.e. set of the parameters) may comprise some or all of the following parameters:

**(TABLE 1)**

| **Sample Parameter** | **Parameter Meaning** | **Example Values** |
|---|---|---|
| Crop X Width | The width of the cropped image as a proportion of the main image width | 0.3, 0.35, 0.4, 0.5, 0.6 |
| Crop X Offset | The horizontal offset of the crop as a fraction of the offset space available | 0, 1/3, 2/3, 1 |
| Crop Y Width | The height of the cropped image as a proportion of the main image width | 0.3, 0.35, 0.4, 0.5, 0.6 |
| Crop Y Offset | The vertical offset of the crop as a fraction of the offset space available | 0, 1/3, 2/3, 1 |
| Sample Size | The size of one of the dimensions of one of its square edges. The crop is shrunk, potentially changing the aspect ratio to do this. | 500, 600, 750, 900 |
| Background Fraction | The proportion of bins assumed to cover all the background. This is used to set a max bin value by which all bins are scaled such that the maximum is 255 (with those above truncated to 255). i.e. | 0.3, 0.2, 0.15, 0.1, 0.05 |
| | scaled_bin value =255 * min (bin_value * total_bins * background_fraction / total_pixels, 1). | |
| | NB this assumes an unsigned-byte black & white pixel representation for the back projected sample. | |
| Bin count | The number of bins per dimension (HSV) for the histogram | 2, 3, 5, 7, 11, 13, 17, 19 |
| Threshold | The value below which a scaled bin contributes to a cluster | 1,2,4,8, 12, 20, 30, 50 |

Before training, a uniform distribution across all sample parameters is assumed (note that the table above implies 51200 unique sample parameters). The optimisation process during training should generate a set of parameters in which:
1) the individual parameters values are more successful than others in general and/or
2) the combination of parameter values is particularly successful

It is likely that the operational conditions will significantly affect the relative performance of parameters combinations. Accordingly, the overall performance of the method will be dependent on the parameters which can be dynamically determined.

Thus, as shown in step S302, the dependent parameters may be calculated, and the set of dependent parameters may comprise some or all of the following parameters:

**(TABLE 2)**

| **Dependent Parameter** | **Sub-parameters)** | **Parameter Meaning** |
|---|---|---|
| Range | | The distance to the middle of the sample |
| Elevation | | The angle of elevation from the camera to the sea in the middle of the sample |
| Area | | The area of sea in the sample |
| Track Density | size category | The expected number of tracks per area of each size category. This measurement will require output from an application that uses historic information to determine likely current conditions, e.g. a pattern-of-life App. For instance it may learn that there is a regular ferry at 10am and that during the morning there are usually 5 cargo ships in transit - equally spaced. |

There may be other dependent parameters but these may be more difficult or intractable to quantify, e.g. lighting, sea-state, visibility, camera quality.

The next step (S304) illustrated in Figure 4 is to estimate the inferred parameters. The set of inferred parameters are parameters from which the resultant quality of performance expected may be inferred for the overall set of gathered parameters. The inferred parameters may comprise some or all of:

**(TABLE 3)**

| **Inferred Parameter** | **Sub-parameters** | **Parameter Meaning** |
|---|---|---|
| Classified Plot Rate | size category | The number of plots per sample that are being classified as relevant objects (one parameter for each size category) |
| Missed Plot Rate | size category | The number of known tracks within the field of view of a sample that are not being detected. Per size category: tracks are proportioned to each size category according to their expected classification where there is uncertainty, using a global expectation in the absence of specific information |
| Filtered Out Plot Rate | | The number of plots per sample filtered out as not being relevant objects |
| Total Cluster Size | | The total number of pixels in the clusters detected in the samples |
| Filtered Out Cluster Rate | | The number of clusters per sample discarded as being below the likelihood threshold |

Inferred parameters are generally estimated due to the large size of the sample parameter space which means that a particular set of sample parameters will be trialled only infrequently. Accordingly, the step (S304) of estimating inferred parameters may comprise measuring the necessary sample parameters and calculating a set of inferred parameters as a sparse set in the sample parameter set space. Estimation of inferred parameters can be improved by noting that the performance of a particular set of sample parameters would be expected to be closely correlated with that of its neighbours. The parameter space may thus be arranged such that movement in a particular direction can expect to have a certainly monotonic and approximately linear effect on performance. Therefore current performance may be estimated through current inferred parameters that are themselves estimated from sparse calculation of the inferred parameters based on recent measurements.

The inferred parameter estimates are calculated (S304) from the sparse measurements by performing a convolution, i.e. a linear combination of kernel operations (or possibly a sequence thereof) on the measured parameters. The high dimensional matrix (tensor) of measured parameters is initialised to average values calculated from training data (processed imagery). On new measurements the data is updated with a half-life (configurable). The combination of kernel operations to estimate the sample parameters from their neighbours is optimised using supervised learning: actual values are measured for all sample parameter sets; then training inputs of sparse measured parameters are labelled with their previously calculated expected outputs. In other words, the estimation of the inferred parameters may be done using another deep learning algorithm.

The next step (S306) illustrated in Figure 4 is to collate the history parameters. The history parameters allow the algorithm to have knowledge of previous choice and hence improve the performance of current choices. The complete set of generated sample parameters may be grouped according to their most obvious functional coupling and a history of their usage maintained as the history parameters.

The history parameters may include some or all of:

**(TABLE 4)**

| **History Parameter** | **Parameter Meaning** |
|---|---|
| Iterations Since Crop Window Selection | Sample Parameter Generation Iterations (Main Image Frames) since this particular crop size and offset parameters were selected |
| Iterations Since Background Selection | Sample Parameter Generation Iterations (Main Image Frames) since this image size for back projection and background proportion were selected |
| Iterations Since Histogram Selection | Sample Parameter Generation Iterations (Main Image Frames) since this bin count and threshold combination were selected |

Once all the sets of parameters have been determined (S300, S302, S304, S306), the relative utility of the complete sample parameter set may be estimated (step S308). Another machine learning algorithm can be used for this purpose. For example, a fully connected deep neural network may be trained using supervised learning to achieve this. The input vector to the deep neural network includes the list of all the parameters and the labelled output vector may be the expected utility of that parameter set. The output vector may comprise some or all of the following utility parameters which relate to high-level picture compilation outcomes:

**(TABLE 5)**

| **Utility Parameter** | **Parameter Meaning** | **Example Score** |
|---|---|---|
| Tracks Created | The (expected) number of plots that contribute to a real track that has not been created (or confirmed) yet | +10 |
| Tracks Updated | The (expected) number of plots that update an existing real track | +1 |
| Missed Tracks Updated | The (expected) number of plots that update a real track that did not get a plot from the previous frame | +2 |
| Stale Tracks Updated | The (expected) number of plots that update a real track not updated for a number of seconds (e.g. 5) | +2 |
| Lost Tracks Updated | The (expected) number of plots that update a real track not update for number of seconds (e.g. 30) | +3 |
| Clutter Initiated | The (expected) number of plots that contribute to a clutter track creation (not an object of interest) | -30 |
| Clutter Updated | The (expected) number of plots that contribute to the update of a clutter track | -10 |
| Good Accuracy | The (expected) number of plots that have >50% of pixels of a tracked object covered by the cluster | +1 |
| Very Good Accuracy | The (expected) number of plots that have >80% of pixels of a tracked object covered by the cluster | +2 |
| Excellent Accuracy | The (expected) number of plots that have >95% of pixels of a tracked object covered by the cluster | +3 |
| Tracks Missed | The (expected) number of plots that have not been created for known (ground truth) tracks within the field of view of the sample | -5 |
| Global Tracks Missed | The (expected) number of plots that have not been created for known (ground truth) track within the field of view of the main image | -2 |

Detection difficulty varies according to size so multipliers are proposed to compensate, for example a very small track may have a multiplier of 5; a small track, a multiplier of 3, a medium track, a multiplier of 2 and a large track, a multiplier of 1 (i.e. no change). The utility labels used when training the network are calculated from the example score values in the table above. Scores are cumulative. Thus, merely as an example, updating a large lost track to 95% accuracy would score +14 overall; whereas if it was a very small track it would score 70.

Example video may be processed offline and the input dependent and inferred parameters are recorded for each sample and the downstream processing (e.g. passing plots through a tracking algorithm) analysed against known ground truth and traced back to each sample. Large quantities of data can be produced from a single pre-analysed video sequence as in each run a different sequence of sample parameters is randomly selected. Thus different video sequences are only necessary in order to give coverage across different environmental conditions, different target object types and different camera setups (rather than producing data to satisfy model capacity and prevent over-fitting).

The deep neural network can be trained (using a methodology similar to reinforcement learning) within an outer iterative process that is bootstrapped by initially assuming equal utility across all sample parameter sets. Refined utility models are then optimised by recreating training data by processing video with the previous utility model. Samples parameter sets are generated with probabilities proportionate to their expected utility. Negative values for the expected utility are truncated to zero and thus in effect discarded. Similarly as shown in Figure 4, at step S310, any parameter sets which have a utility below a threshold (which may be zero or higher) may be discarded.. An algorithm which is faster than linear search through the parameter set utilities is preferable. An option would be to invert the process and create a proportionate list of references to parameter sets that can then be uniformly selected by index.

It is important the sample parameter selection process continues to explore the parameter space. Therefore a proportion of samples may be generated from a uniform distribution. Furthermore ensemble or composite sample parameter generation is possible and may be advantageous. The sample parameter set may thus comprise a subset which is generated from a uniform distribution and another subset generated as described above.

At least some of the example embodiments described herein may be constructed, partially or wholly, using dedicated special-purpose hardware. Terms such as 'component', 'module', 'processor' or 'unit' used herein may include, but are not limited to, a hardware device, such as circuitry in the form of discrete or integrated components, general processing units (GPUs), a Field Programmable Gate Array (FPGA) or Application Specific Integrated Circuit (ASIC), which performs certain tasks or provides the associated functionality. In some embodiments, the described elements may be configured to reside on a tangible, persistent, addressable storage medium and may be configured to execute on one or more processors. These functional elements may in some embodiments include, by way of example, components, such as software components, object-oriented software components, class components and task components, processes, functions, attributes, procedures, subroutines, segments of program code, drivers, firmware, microcode, circuitry, data, databases, data structures, tables, arrays, and variables. Although the example embodiments have been described with reference to the components, modules and units discussed herein, such functional elements may be combined into fewer elements or separated into additional elements.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A method for detecting objects within a video stream comprising a plurality of frames, the method comprising
generating a first set of sample generation parameters which determine how a plurality of sample sub-sections are generated from a first frame of the video stream;
applying the first set generated sample generation parameters to a first frame to generate a first plurality of sample sub-sections from the first frame;
analysing the first plurality of sample sub-sections to identify any clusters within each sample sub-section;
combining overlapping clusters to form at least one plot; and
classifying the at least one first plot to provide a classification which is indicative of which object is within the at least one plot.

2. The method of claim 1, further comprising estimating a likelihood value for each identified cluster.

3. The method of claim 2, comprising estimating the likelihood value using a machine learning algorithm.

4. The method of claim 2 or claim 3, comprising estimating the likelihood value for a cluster using cluster metrics which are selected from one or more of cluster size of the cluster, the sample generation parameters used to generate the sample sub-section in which the cluster is located, a value indicating which parts of the cluster overlap with other clusters within the sample sub-section and the number of sample sub-sections within which the cluster is located but which generate no clusters which overlap the cluster.

5. The method of claim 4, comprising using the cluster metrics when generating a subsequent set of sample generation parameters.

6. The method of any one of claims 2 to 5, further comprising filtering the identified clusters based on the estimated likelihood value before combining overlapping clusters.

7. The method of any preceding claim, wherein analysing the plurality of sample sub-sections to identify any clusters comprises applying a back detection algorithm to generate a grayscale image for each sample sub-section and isolating clusters within the grayscale image by applying a threshold to the grayscale image.

8. The method of any preceding claim, comprising deciding whether the classification is of interest and when it is determined that the classification is not of interest, discarding the plot.

9. The method of any preceding claim, wherein classifying the at least one plot comprises determining the relative probability that the classification is correct and outputting the relative probability with the at least one plot.

10. The method of any preceding claim, wherein classifying the plot comprises dividing the plot into sub-plots and classifying each sub-plot separately to provide a sub-classification which is indicative of which object in within each sub-plot.

11. The method of claim 10, wherein the steps of dividing and classifying are iterated until a sub-classification which corresponds to an object of interest is awarded.

12. The method of any preceding claim, wherein the generating, applying, analysing, combining and classifying steps are repeated for subsequent frames of the video stream to generate subsequent plots and a classification which is indicative of which object is within the subsequent plots.

13. The method of claim 12, further comprising comparing the subsequent plots with each other and with the at least one plot to determine whether any plots have the same classification.

14. The method of claim 13, further comprising identifying a track between plots having the same classification wherein the track is indicative of movement of the object within the plots.

15. A system for detecting objects within a video stream comprising a plurality of frames, the system comprising
at least one camera capturing the video stream; and
a processor which receives the captured video stream and carries out the method of any one of claims 1 to 14.
